# EUROPEAN PATENT APPLICATION

(11) **EP 1 265 446 A1**
(43) Date of publication of application: **11.12.2002**
(21) Application number: 01304873.1
(22) Date of filing: 04.06.2001
(51) Int. Cl.: H04Q 3/66

(54) **Optimum routing based on quality measurements**

(71) Applicant: BRITISH TELECOMMUNICATIONS public limited company, London EC1A 7AJ (GB)
(72) Inventor: Hollier, Michael Peter, Tuddenham St. Martin, Ipswich IP6 9BH (GB); Reynolds, Richard John Buchan, Ipswich IP3 8AP (GB); Rix, Antony William, Cambridge CB1 3PU (GB); Gray, Philip, Ipswich, Suffolk, IP4 5HP (GB)
(74) Representative: Lidbetter, Timothy Guy Edwin

(57) **Abstract**

An agent-based system for selecting the optimum routing for a telecommunications call allows a user terminal 11 to select the optimum access point 12, 13 according to predetermined criteria. Similarly, in order to select the network to be used, each access point 12, 13 uses an agent-based system for selecting which network to use for such communication. Either or both of these interactions includes a measure of the actual currently perceived signal quality of the proposed link (124, 125,) 134, (135) which is used as one of the criteria.

## Description

This invention relates to agent-based service selection systems. In these systems a computer "client agent" requiring a service searches a number of "server agents" offering potentially suitable services, to identify the optimum way of performing that service. The decision as to which server to select is typically based on price and other quantitative measures. In the telecommunications industry a typical such measure is bandwidth availability. The prices offered typically reflect the bandwidth requirement for a given service on a moment by moment basis (second by second) and the demand for bandwidth at any given time. The client agent is programmed with the user's specific requirements, such as minimum bandwidth, maximum price, and criteria for comparing offerings within those limits, and selects the offering best meeting those requirements.

The concepts of market driven pricing are relatively new and the practical means of implementing and operating services with dynamically varying price are still emerging. It is likely that increasing market liberalisation will also result in the possibility for customers to choose between different service providers (and perhaps service providers between different network providers) on a per use basis, or even more dynamically during a given session.

In such a dynamic market place, competition will be intense. It is therefore easy to imagine that it will become difficult for customers and service providers to choose the service/bandwidth combination that offers the best "quality" to the end user.

According to the present invention there is provided an agent-based service selection process for setting up communications connections, in which a quantified service quality measure is used by the agents for determining the selection to be made. An agent-based service selection process for setting up communications connections, in which a quantified service quality measure is used by the agents for determining the selection to be made. The process may be used to support a connection request in which a client-based agent at a first node establishes a test connection between the first node and a second node, and measures the service quality over the test connection. A client-based agent at the second node amy also establish a test connection with a third node. Service service quality may then be measured by this client-based agent, or the client-based agent at the first node may measures service quality over the end-to-end combined test connections between the first node and the third node. The invention is preferably implemented by agent-based computer programs.

In this way client-side requirements or server-side offerings can be varied dynamically in response to the service quality that can currently be offered. Customers or service providers (or both) may be willing to modify the required or offered service quality based on a dynamically varying price. For example, a service provider may wish to react to the fact that bandwidth demand is high by altering the service offered, e.g. to reduce or remove the video component of a multi-media service while maintaining a degree of basic usability. The user may choose to postpone or modify his requirements to control the cost of his activity, or if he does not wish the service modification to take place, for example beacuse it is critical to his current activity, or he is nearing completion of a task, he may indicate that he is prepared to pay a higher price for his bandwidth requirements.

The quantifiable metric is preferably derived from a measurement process that generates a measure of the quality of the system as it would be perceived by the human users of the system. Such systems are described in the present applicant's existing European patents 0647375, 0705501, 0776567, and 1046155, United States Patents 5621854, 5794188, 5799133, 5848384, 5890104, 5940792, 5999900, 6035270, 6044147 and 6119083, and International Patent Applications WO98/53589, WO98/53590, WO99/21173 WO00/22803, WO00/48407 and WO/01/11854 and WO01/35393.

Illustrative embodiments of the invention will now be described, by way of example, with reference to the drawings in which:
Figure 1 illustrates schematically the various elements which co-operate in the performance of the invention
Figure 2 illustrates the processes carried out by the invention

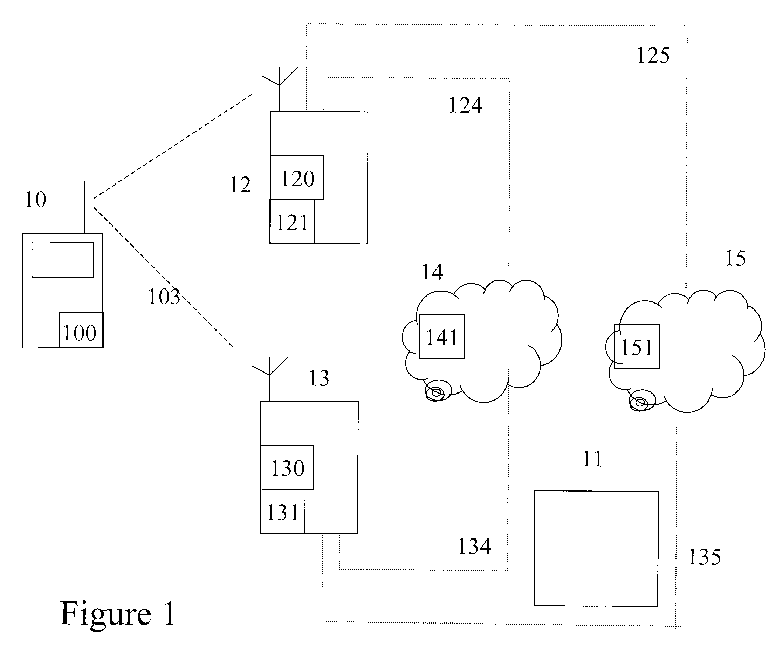

In Figure 1 there is depicted a user terminal 10, illustrated as a mobile radio terminal, and two service provider access points 12, 13, each of which has access to each of two networks 14, 15 through which connection can be made to a second user terminal 11. This second terminal 11 may be an internet website, another mobile terminal, or some other destination. It can be seen that there are four possible connection routes 124, 125, 134, 135 between the termination points 10, 11.

The user terminal 10 has a client agent system 100 and the access points 12, 13 each have server agent systems 121, 131. Interaction between these agents allows the user terminal to select the optimum server, according to criteria set up in the agent's programming for communication with the remote terminal 11. Similarly, in order to select the network to be used, each access point 12, 13 has a respective client agent 120, 130 and each network 14, 15 has a respective server agent 141, 151 for selecting which network to use for such communication.

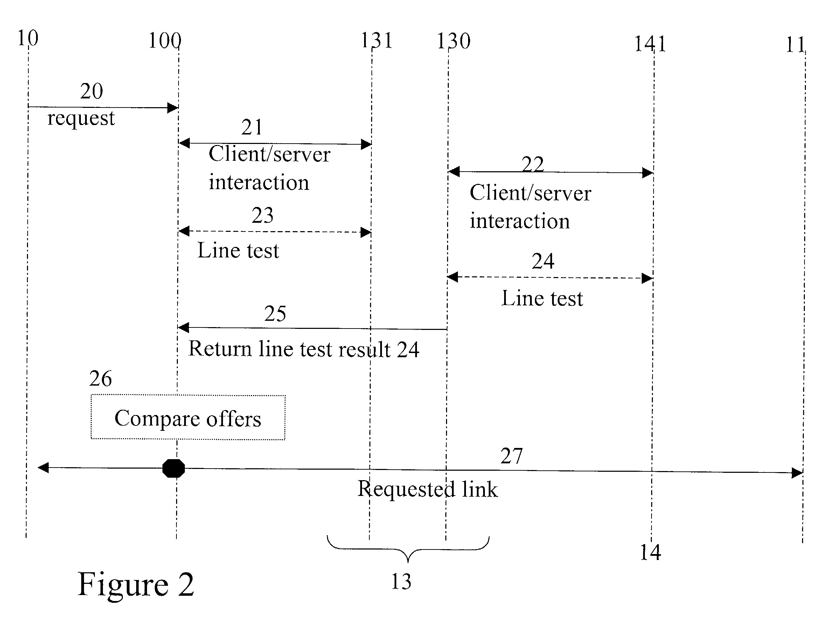

The procedure carried out by this embodiment is depicted in Figure 2 only for one service provider access point 13 and one network 14. It will be understood that a similar procedure takes place for the other combinations of server and access point. As shown in Figure 2, when a user requests a connection to be set up between the terminals 10, 11, (step 20) the client agent 100 in the user terminal interrogates the server agents (121), 131 in the service provider access points (12), 13 (step 21) to identify how the service providers can meet the requirements set up by the client server. (The prior art process carried out when a mobile telephone searches for a network to which to connect, in circumstances where it has access rights to more than one network, follows a similar procedure. The mobile unit automatically connects to the service provider with the strongest signal as detected by the mobile unit. More sophisticated agent-based systems take price and available bandwidth into account in selecting the service provider to use).

In the invention, the service providers (12), 13, also each use an agent-based system to select the preferred network on which to carry the call. The service provider 13 transmits a request (step 22), from its client agent 130 to the server agents 141, (151) associated with the networks 14, (15) and enters a negotiation process, based on price, bandwidth availability and other factors.

According to the present invention, either or both of these interactions 21, 22 includes a measure of the actual currently perceived signal quality of the proposed link (124, 125,) 134, (135). Note that there may be more than one measured value for each link, if several cost/bandwidth combinations are on offer.

In order to measure the quality of the signal, the user's client agent 100 and service provider's server agent 131 set up a test link 103, (step 23) having the bandwidth, delay time, error checking processes and other physical characteristics of the proposed connection, and the user's client agent 100 then tests the link and records a measure of link quality. Similarly the service provider's client agent 130 and network operator's server agent 141 set up a test link over the proposed connection 134, (step 24) having the bandwidth, delay time, error checking processes and other physical characteristics of the proposed connection, and the client agent 130 then tests this link and records a measure of link quality.

In the present example there are two client/server agent interactions (23, 24 etc) on each possible connection 124, 125, 134, 135. The service provider server agents 121, 131 may include quality measurements made on the networks 14, 15 detected by its client agents 120, 130 as a factor in their offerings to the customer client agent 100. However, in a preferred arrangement the measurement of end-to-end service quality of each offering is returned to the customer's client agent 100 (step 25), so that the client agent may assess the end-to-end signal quality, selects the optimum offering on the basis of signal quality, price, speed and any other factors programmed into the client server (step 26), and cause the selected connection to be set up (step 27).

In this way the customer with a choice of service providers has a means on which to base his decision.

A terminal's client server 100 may make several access requests 20, 21, 22, 23, 24, 25 using different criteria, each request being made through the same service provider 13 and network 14. The results may be presented to the user to allow him to optimise final presentation

Service providers may also use the process to demonstrate to a customer that they can currently offer the best price/quality deal. They may also use the system to ensure that they are delivering the service quality selected. This gives the option to dynamically optimise bandwidth and price within guaranteed levels.

## Claims

1. An agent-based service selection process for setting up communications connections, in which a quantified service quality measure is used by the agents for determining the selection to be made.

2. A process according to claim 1, supporting a connection request in which a client-based agent at a first node establishes a test connection between the first node and a second node, and measures the service quality over the test connection.

3. A process according to claim 2, wherein a client-based agent at the second node establishes a test connection with a third node, and measures service quality over the test connection.

4. A process according to claim 2, wherein a client-based agent at the second node establishes a test connection with a third node, and the client-based agent at the first node measures service quality over the end-to-end combined test connections between the first node and the third node.

5. A computer program for performing the steps of any of claims 1 to 4.

6. A computer program product directly loadable into the internal memory of a computer, comprising software code portions for performing the steps of any of claims 1 to 4 when said product is run on a computer.

7. A computer program product stored on a computer usable medium, comprising:
computer-readable program means for causing a computer to establish a plurality of test connections between each of several nodes, to measure the service quality over the test connections using a quantified service quality measure, and to select a test connection for establishing a service connection in accordance with the maesurements made.
